(19) Europäisches Patentamt
European Patent Office
Office européen des brevets

(11) EP 1 696 000 B2

(12) NEW EUROPEAN PATENT SPECIFICATION
After opposition procedure

(45) Date of publication and mention of the opposition decision:
**15.10.2014 Bulletin 2014/42**

(45) Mention of the grant of the patent:
**09.03.2011 Bulletin 2011/10**

(21) Application number: **04801676.0**

(22) Date of filing: **06.12.2004**

(51) Int Cl.:
***C08L 67/02*** *(2006.01)* ***C08K 9/06*** *(2006.01)*

(86) International application number:
**PCT/JP2004/018529**

(87) International publication number:
**WO 2005/056678 (23.06.2005 Gazette 2005/25)**

# (54) POLYESTER RESIN COMPOSITION AND MOLDED OBJECT

POLYESTERHARZZUSAMMENSETZUNG UND FORMKÖRPER

COMPOSITION DE RESINE POLYESTER ET OBJET MOULE

(84) Designated Contracting States:
**DE GB**

(30) Priority: **12.12.2003 JP 2003415790**

(43) Date of publication of application:
**30.08.2006 Bulletin 2006/35**

(73) Proprietor: **Kaneka Corporation**
**Osaka (JP)**

(72) Inventors:
- **SUZUKI, Noriyuki**
**6660115 (JP)**
- **MIYANO, Atsushi**
**5690846 (JP)**

(74) Representative: **Vossius & Partner**
**Siebertstrasse 4**
**81675 München (DE)**

(56) References cited:

| | |
|---|---|
| **EP-A1- 1 026 203** | **JP-A- S11 101 905** |
| **JP-A- S54 144 454** | **JP-A- 2000 053 847** |
| **JP-A- 2000 212 294** | **JP-A- 2000 212 294** |
| **JP-A- 2004 277 720** | **US-A- 5 869 543** |

- **DATABASE WPI Week 199904 Derwent Publications Ltd., London, GB; AN 1999-045742 XP002405398 & WO 98/55529 A1 (UNITIKA LTD) 10 December 1998 (1998-12-10)**



Printed by Jouve, 75001 PARIS (FR)

## Description

The present invention relates to a polyester resin composition comprising a polyalkylene terephthalate resin having an acid value of not higher than 30 μeq/g and a layered compound and to a molded article derived therefrom.

Polyalkylene terephthalate resins, such as polyethylene terephthalate, are excellent in thermal stability, chemical resistance, weather resistance, mechanical characteristics, electrical characteristics, and the like, and therefore are used as injection molding materials, fibers and films in a number of industrial fields. In recent years, however, polyalkylene terephthalate resins have been required to have further improved or enhanced mechanical characteristics and thermal stability.

To meet such requirements, the present inventors have so far disclosed technologies concerning resin compositions comprising a polyalkylene terephthalate resin and a layered compound treated in various ways (cf. Japanese Kokai Publication Hei-10-259016, Japanese Kokai Publication Hei-10-310420, WO 99/23162, WO 01/88035). According to those technologies, layered silicates, when finely dispersed in the polyalkylene terephthalate resin following cleavage into unit layers, could increase the elasticity and thermal stability of articles produced by molding the resin composition, without causing any loss of surface gloss and without causing warping. However, even though the surface gloss just after molding was good, the surface gloss after heat treatment could not be said to be satisfactory. In some cases, long-term high temperature exposure tends to result in a decrease in surface gloss.

As another technology, an invention concerning a resin composition has been disclosed which composition comprises a polyalkylene naphthalate resin and a poybutylene terephthalate resin and/or polyethylene terephthalate resin with an acid value of not higher than 70 μeq/g (cf. Japanese Kokai Publications 2002-179895 and 2003-268216). However, problems remain; for example, the surface gloss heat resistance is yet unsatisfactory (upon exposure to elevated temperatures, the surface gloss diminishes, so that the composition cannot be used in manufacturing reflectors of automotive headlamp extensions, lightings of establishments and the like. Improvements have thus been desired.

As discussed above, no technology has been found in the art for obtaining polyester resin compositions capable of giving molded articles which will not lose their surface gloss even upon exposure to high temperatures, show only a slight degree of warping and are excellent in elastic modulus and thermal stability.

It is an object of the present invention to alleviate such prior art problems and provide a polyester resin composition which can give molded articles which even upon exposure to elevated temperatures, will not lose their surface gloss and will show little warping and are high in elastic modulus and thermal stability and to such molded articles derived from that polyester resin composition.

As a result of intensive investigations made by them to accomplish the above object, the present inventors have now successfully developed a polyester resin composition having excellent characteristics by uniformly and finely dispersing a layered compound in a polyalkylene terephthalate resin having an acid value of not higher than 30 μeq/g.

Thus, in a first aspect thereof, the present invention relates to
a polyester resin composition
which comprises a polyalkylene terephthalate resin having an acid value of not higher than 30 μeq/g and a layered' compound, wherein the layered compound has been treated with a polyether compound.

In a preferred mode of embodiment, the invention relates to
the polyester resin composition as described above
wherein the polyalkylene terephthalate resin having an acid value of not higher than 30 μeq/g comprises at least one polyalkylene terephthalate resin selected from the group consisting of polyethylene terephthalate resins, polypropylene terephthalate resins and polybutylene terephthalate resins.

In a more preferred mode of embodiment, the invention relates to
the polyester resin composition as described above
wherein the layered compound has been treated with a silane compound.

In a second aspect, the invention relates to
a polyester resin-based molded article
which is partly or wholly made of the polyester resin composition described above.

In a more preferred mode of embodiment, the invention relates to
the polyester resin-based molded article as described above
which satisfies the following requirements (a) and (b) :

(a) That the diffuse reflectance of the surface provided with an aluminum layer without primer coating should be not higher than 2.0%, wherein the diffuse reflectance is measured according to JIS D 5705 and the thickness of the aluminum layer is about 800 Å ;
(b) That the deflection temperature under a load of 0.45 MPa should be not lower than 150°C, wherein the deflection temperature is measured according to ASTM D 648 and the used test specimen is about 10 x 100 x 6 mm in size.
In a more preferred mode of embodiment, the invention relates to

the polyester resin-based molded article as described above
which further satisfies the following requirement (c) :
(c) That the diffuse reflectance of the surface provided with an aluminum layer without primer coating as measured after 10 hours of treatment at 150°C should be not higher than 3.0%, wherein the deflection temperature is measured according to ASTM D 648 and the used test specimen is about 10 x 100 x 6 mm in size.

By uniformly and finely dispersing a layered compound in a polyalkylene terephthalate resin having an acid value of not higher than 30 μeq/g, there is provided a polyester resin composition capable of giving molded articles the surface gloss of which will not be lessened even upon exposure to elevated temperatures and which show only a slight extent of warping and are high in elastic modulus and thermal stability. The polyester resin-based molded articles partly or wholly formed of the above-mentioned polyester resin composition have such characteristics that the diffuse reflectance of the surface thereof provided with an aluminum layer without primer coating is low and the diffuse reflectance will not increase even upon exposure to elevated temperatures.

The polyalkylene terephthalate resin to be used in the practice of the invention is any of those polyalkylene terephthalate resins which are known in the art and are obtained by reacting an acid component, which is terephthalic acid and/or an ester forming derivative of terephthalic acid, with a diol component, which is a diol compound and/or an ester forming derivative of a diol compound.

The diol component includes ethylene glycol, propylene glycol, butylenes glycol, hexylene glycol and neopentyl glycol. In addition, an alicyclic glycol, such as 1,4-cyclohexanedimethanol, or a substitution product therefrom or a derivative thereof may also be used if in such a small amount that the physical properties of the polyalkylene terephthalate resin would not be markedly deteriorated. Further, a long-chain diol compound (e.g. polyethylene glycol, polytetramethylene glycol), a bisphenol-alkylene oxide adduct (e.g. bisphenol A-ethylene oxide adduct) or the like may also be used in combination if in such a small amount that the elastic modulus of the polyalkylene terephthalate resin would not be markedly lowered.

Among the above-mentioned diol components, ethylene glycol, propylene glycol, butylene glycol, 1,4-cyclohexanedimethanol and 2,2-bis(4-hydroxyphenyl)propane-polyethylene oxide adduct are preferred from the ease of handling viewpoint and in view of the tenacity and elastic modulus, for example, of the polyalkylene terephthalate resins obtained therefrom.

As specific examples of the polyalkylene terephthalate resin to be used in the practice of the invention, there may be mentioned polyethylene terephthalate, polypropylene terephthalate, polybutylene terephthalate, polyhexamethylene terephthalate, polycyclohexane-1,4-dimethyl terephthalate, polyneopentyl terephthalate, and copolyesters derived from these and bisphenol A-polyethylene oxide adducts and/or polytetramethylene glycol. Those may be used singly or two or more of them may be used in combination.

Among the polyalkylene terephthalate resins mentioned above, polyethylene terephthalate, polypropylene terephthalate and polybutylene terephthalate and, further, copolymers based on these resins and a bisphenol A-polyethylene oxide adduct compound or polytetramethylene glycol are preferred from the viewpoint of handleability, stiffness, crystallinity, thermal stability and surface characteristics. Polyalkylene isophthalate and polyalkylene naphthalate and like resins are low in crystallinity and readily lead to deteriorated surface characteristics and, therefore, they are unfavorable.

The molecular weight of the polyalkylene terephthalate resin to be used in the practice of the invention is selected taking into consideration the flowability in the mold in the step of molding and various physical properties of final products to be produced. It is necessary to set the molecular weight at an appropriate level, not an excessively low or excessively high level. Thus, the molecular weight of the polyalkylene terephthalate resin has a logarithmic viscosity of 0.3 to 2.0 (dl/g), preferably 0.35 to 1.9 (dl/g), more preferably 0.4 to 1.8 (dl/g), as measured at 25°C using a phenol-tetrachloroethane mixed solvent (weight ratio: 5/5). When the logarithmic viscosity is lower than 0.3 (dl/g), the molded articles obtained from the polyester resin composition will be inferior in mechanical characteristics and, when it is higher than 2.0 (dl/g), processability problems, for example flowability problems on the occasion of molding, tend to arise.

The polyalkylene terephthalate resin to be used in the practice of the invention has an acid value of not higher than 30 μeq/g, preferably not higher than 25 μeq/g, still more preferably not higher than 20 μeq/g. When the acid value is higher than 30 μeq/g, the heat resistance of the surface gloss of the molded articles tends to be impaired due to generation of lower-molecular substances resulting from deterioration in the step of melt processing. There is no particular lower limit to the acid value.

The polyalkylene terephthalate resin having an acid value of not higher than 30 μeq/g can be obtained by shortening the thermal history in the step of polymerization. The measure for shortening the thermal history during polymerization is not particularly restricted but may comprise, for example, improving the degassing efficiency during polymerization or carrying out uniform stirring so that any portion of the polymerization mixture may not be left untransferred. Preferably used for increasing the degassing efficiency during polymerization is, for example, a horizontal polymerizer equipped with a twin-screw stirring system capable of forming a thin polymer layer at the gas-liquid interface

and thus forming a wide mass transfer plane. Preferably used for attaining uniform stirring is a polymerizer having a shape such that there is no dead space formed within the polymerizer and the reaction mass is hardly retained therein and having self-cleaning ability as a result of, for example, the so-called scraper action owing to its having great stirring blades which can effect stirring while scraping away the reaction mixture from the polymerizer inside wall and from each other. Further, as for the polymerization, a continuous manner of polymerization is preferred to a batchwise manner of polymerization. The polymerizer having such functions is not particularly restricted but may be, for example, Sumitomo Heavy Industries Ltd's horizontal twin-screw reaction apparatus for high-viscosity reaction mixtures.

The acid value mentioned above can be measured by any of the conventional methods in general use. An example of such methods is as follows. Thus, the acid value can be determined by dissolving the polyalkylene terephthalate resin in a solvent such as benzyl alcohol with heating and titrating the solution with a 0.01 N solution of sodium hydroxide in benzyl alcohol.

The layered compound to be used in the practice of the invention is at least one species selected from the group consisting of silicates, phosphates such as zirconium phosphate, titanates such as potassium titanate, tungstates such sodium tungstate, uranates such as sodium uranate, vanadates such as potassium vanadate, molybdates such as magnesium molybdate, niobates such as potassium niobate, and graphite. Layered silicates are preferably used in view of their ready availability and handleability, and the like.

The layered silicates mentioned above are formed of tetrahedral sheets mainly composed of silicon oxide and octahedral sheets mainly composed of a metal hydroxide and include, for example, smectite group clay minerals and expandable mica species.

The smectite group clay minerals to be used in the practice of the invention are natural or synthetic ones represented by the general formula (1):

$$X1_{0.2\text{-}0.6}Y1_{2\text{-}3}Z1_4O_{10}(OH)_2\cdot nH_2O \qquad (1)$$

wherein X1 represents at least one member selected from the group consisting of K, Na, 1/2Ca and 1/2Mg, Y1 represents at least one member selected from the group consisting of Mg, Fe, Mn, Ni, Zn, Li, Al and Cr, Zl represents at least one member selected from the group consisting of Si and Al, $H_2O$ represents a water molecule bound to an interlayer ion and the number n varies according to the interlayer ion species and relative humidity. As specific examples of the smectite group clay minerals, there may be mentioned, for example, montmorillonite, beidellite, nontronite, saponite, iron saponite, hectorite, sauconite, stevensite, bentonite and the like, substitution products from and derivatives of these, and mixtures of these. The smectite group clay minerals have a basal plane distance of about 10 to 17 Å in the initial stage of coagulation thereof and have an average particle size of 1, 000 Å to 1,000,000 Å in the coagulated state.

The expandable fluoromica species to be used in the practice of the invention can be obtained by subjecting a mixture containing talc and sodium and/or lithium silicofluoride or fluoride to heat treatment. A typical method of such treatment is disclosed in Japanese Kokai Publication Hei-02-149415, and the like. Thus, this method comprises causing intercalation of the sodium ion and/or lithium ion between layers in talc species to thereby obtain expandable micas. According to this method, talc is mixed with a silicofluoride and/or a fluoride and the mixture is treated at about 700 to 1, 200°C. Those expandable micas produced by this method are particularly preferred as the ones to be used in the practice of the invention. For obtaining expandable micas, it is necessary that the silicofluoride- or fluoride-constituting metal be sodium or lithium. These may be used singly or in combination. The silicofluoride and/or fluoride to be used with talc is preferably used in an amount of 10 to 35% by weight relative to the whole mixture. Outside this range, the expandable mica yields drops.

The expandable micas produced by the method mentioned above have a structure represented by the general formula (2) :

$$\alpha(MF)\cdot\beta(aMgF_2\cdot bMgO)\cdot\gamma SiO_2 \qquad (2)$$

wherein M represents sodium or lithium, $\alpha$, $\beta$, $\gamma$, a and b respectively represent coefficients and $0.1 \leq \alpha \leq 2$, $2 \leq \beta \leq 3.5$, $3 \leq \gamma \leq 4$, $0 \leq a \leq 1$, $0 \leq b \leq 1$ and $a + b = 1$.

In the process of producing the expandable micas to be used in the practice of the invention, it is also possible to adjust the expandability of the expandable micas to be produced by adding a small amount of alumina ($Al_2O_3$).

The expandable micas have such a property that they are expanded in water, a polar solvent miscible with water in arbitrary proportions or a mixed solvent composed of water and such a polar solvent. The expandability so referred to herein is a characteristic such that the expandable mica in question absorbs such polar molecules within interlayers thereof, whereby the interlayer distance is extended or the mica is further expanded, resulting in cleavage. As examples of the expandable micas, there may be mentioned lithium taeniolite, sodium taeniolite, lithium tetrasilicic mica, sodium tetrasilicic mica and the like, substitution products therefrom, derivatives thereof, and mixtures of these. The expandable micas have a basal plane distance of about 10 to 17 Å in the initial stage of coagulation, namely before

expansion or swelling, and have an average particle diameter of about 1, 000 to 1,000,000 Å before expansion.

Among the expandable micas mentioned above, some have a structure resembling to that of vermiculites, and such vermiculite equivalents and the like can be used as well. The vermiculite equivalents have a trioctahedral or dioctahedral structure and include those represented by the general formula (3) :

$$(Mg,Fe,Al)_{2\text{-}3}(Si_{4-x}Al_x)O_{10}(OH)_2\cdot (M^+,M^{2+}{}_{1/2})_x\cdot nH_2O \qquad (3)$$

wherein M represents an exchangeable cation such as an alkali or alkaline earth metal, for example Na or Mg, x = 0.6 to 0.9, n = 3. 5 to 5. The above-mentioned vermiculite equivalents have a basal plane distance of about 10 to 17Å in the initial stage of coagulation and an average particle diameter of about 1, 000 to 5,000,000 Å in the coagulated state.

Although the layered silicates desirably have a highly pure crystal structure resulting from regular layering in the direction of the c axis, use may also be made of the so-called mixed-layer or interstratified minerals with crystallographic period irregularities as a result of a plurality of crystal structures being mixed together.

The layered silicates may be used singly or two or more of them may be used in combination. Among them, montmorillonite, bentonite, hectorite and interlayer sodium ion-containing expandable mica species are preferred in view of their dispersibility in the polyester resin compositions obtained and their effects in improving the physical properties of the polyester resin compositions.

The polyether compound to be used as a surface treatment agent for the layered compound in the practice of the invention is preferably a compound whose main chain is a polyoxyalkylene such as polyoxyethylene or a polyoxyethylene-polyoxypropylene copolymer in which the number of recurring units is preferably 2 to about 100. The polyether compound may have one or more arbitrary substituents in the side chain(s) and/or main chain provided that they will not adversely affect either the polyalkylene terephthalate or the layered compound. As examples of such substituents, there may be mentioned, for example, hydrocarbon groups, groups bound through ester bonding, an epoxy group, amino groups, a carboxyl group, carbonyl-terminated groups, amido groups, mercapto groups, groups bound through sulfonyl bonding, groups bound through sulfinyl bonding, a nitro group, a nitroso group, a nitrile group, alkoxysilyl groups, silanol and other Si atom-containing functional groups capable of forming an Si-O- bond, halogen atoms, a hydroxyl group and the like. The polyether compound may be substituted by one or more species among these.

The hydrocarbon groups include straight or branched (i.e. having a side chain (s)), saturated or unsaturated, monovalent or polyvalent, aliphatic hydrocarbon groups, aromatic hydrocarbon groups or alicyclic hydrocarbon groups, for example alkyl groups, alkenyl groups, alkynyl groups, phenyl group, naphthyl groups and cycloalkyl group. Unless otherwise specified, the term "alkyl groups" as used herein includes polyvalent hydrocarbon groups such as "alkylene groups". Similarly, the alkenyl groups, alkynyl groups, phenyl group, naphthyl groups and cycloalkyl groups respectively include alkenylene groups, alkynylene groups, phenylene groups, naphthylene groups, cycloalkylene groups and the like.

While the substituent species and the proportion(s) thereof in the polyether compound are not particularly restricted, it is desirable that the polyether compound be soluble in, water, a polar solvent freely miscible with water or a water-containing polar solvent. More specifically, the solubility of that compound is preferably not lower than 1 g, more preferably not lower than 2 g, still more preferably not lower than 5 g, particularly preferably not lower than 10 g, most preferably not lower than 20 g, per 100 g of water at room temperature. As the polar solvent, there may be mentioned, for example, alcohols such as methanol, ethanol and isopropanol, glycols such as ethylene glycol, propylene glycol and 1,4-butanediol, ketones such as acetone and methyl ethyl ketone, ethers such as diethyl ether and tetrahydrofuran, amide compounds such as N,N-dimethylformamide and N,N-dimethylacetamide, and other solvents such as pyridine, dimethyl sulfoxide and N-methylpyrrolidone. Carbonic diesters such as dimethyl carbonate and diethyl carbonate may also be used. These polar solvents may be used singly or two or more of them may be used in combination.

As specific examples of the polyether compound to be used in the practice of the invention, there may be mentioned polyethylene glycol, polypropylene glycol, polytetramethylene glycol, polyethylene glycol-polypropylene glycol, polyethylene glycol-polytetramethylene glycol, polyethylene glycol monomethyl ether, polyethylene glycol dimethyl ether, polyethylene glycol monoethyl ether, polyethylene glycol diethyl ether, polyethylene glycol monoallyl ether, polyethylene glycol diallyl ether, polyethylene glycol monophenyl ether, polyethylene glycol diphenyl ether, polyethylene glycol octyl phenyl ether, polyethylene glycol methyl ethyl ether, polyethylene glycol methyl allyl ether, polyethylene glycol glyceryl ether, polyethylene glycol monomethacrylate, polyethylene glycol monoacrylate, polypropylene glycol monomethacrylate, polypropylene glycol monoacrylate, polyethylene glycol-polypropylene glycol monomethacrylate, polyethylene glycol-polypropylene glycol monoacrylate, polyethylene glycol-polytetramethylene glycol monomethacrylate, polyethylene glycol-polytetramethylene glycol monoacrylate, methoxypolyethylene glycol monomethacrylate, methoxypolyethylene glycol monoacrylate, octoxypolyethylene glycol-polypropylene glycol monomethacrylate, octoxypolyethylene glycol-polypropylene glycol monoacrylate, lauroxypolyethylene glycol monomethacrylate, lauroxypolyethylene glycol monoacrylate, stearoxypolyethylene glycol monomethacrylate, stearoxypolyethylene glycol monoacrylate, allyloxypolyethylene glycol monomethacrylate, allyloxypolyethylene glycol monoacrylate, nonylphenoxypolyethylene glycol monomethacrylate, nonylphenoxypolyethylene glycol monoacrylate, polyethylene glycol dimethacrylate, polyethylene glycol diacrylate, polyethylene glycol-polytetramethylene glycol dimethacrylate, polyethylene glycol-polytetramethylene glycol diacrylate, bis(polyethylene glycol)butylamine, bis(polyethylene glycol)octylamine, polyethylene glycol-bisphenol A ether, polyethylene glycol-polypropylene glycol-bisphenol A ether, ethylene oxide-modified bisphenol A dimethacrylate, ethylene oxide-modified bisphenol A diacrylate, ethylene oxide-propylene oxide-modified bisphenol A dimethacrylate, polyethylene glycol diglycidyl ether, polyethylene glycol ureidopropyl ether, polyethylene glycol mercaptopropyl ether, polyethylene glycol phenylsulfonylpropyl ether, polyethylene glycol phenylsulfinylpropyl ether, polyethylene glycol nitropropyl ether, polyethylene glycol nitrosopropyl ether, polyethylene glycol cyanoethyl ether, polyethylene glycol cyanoethyl ether and the like. These polyether compounds may be used singly or two or more of them may be used in combination.

Preferred as the polyether compound to be used in the practice of the invention are those containing cyclic hydrocarbon groups such as aromatic hydrocarbon groups and/or alicyclic hydrocarbon groups and, among them, those containing the unit represented by the general formula (4):

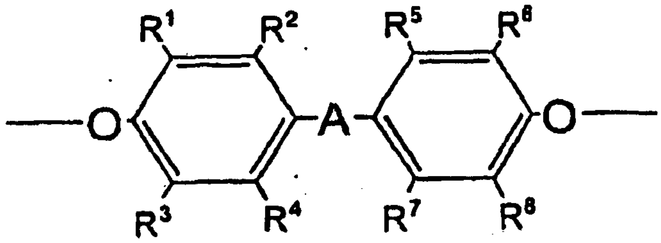

(4)

wherein -A- is -O-, -S-, -SO-, $-SO_2-$, -CO-, an alkylene group containing 1 to 20 carbon atoms or an alkylidene group containing 6 to 20 carbon atoms and $R^1$, $R^2$, $R^3$, $R^4$, $R^5$, $R^6$, $R^7$ and $R^8$ may be the same or different and each independently is a hydrogen atom, a halogen atom or a monovalent hydrocarbon group containing 1 to 5 carbon atoms, are preferred.

Further, those represented by the general formula (5):

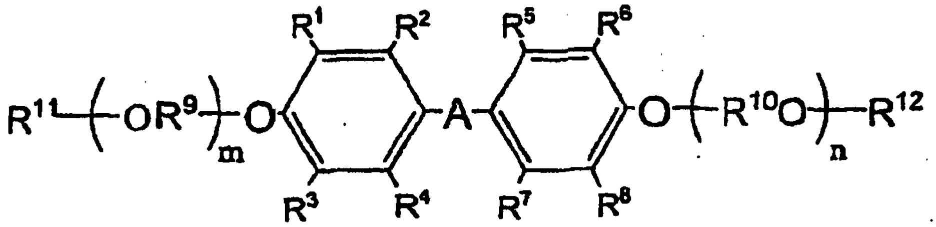

(5)

wherein -A- is -O-, -S-, -SO-, $-SO_2-$, -CO-, an alkylene group containing 1 to 20 carbon atoms or an alkylidene group containing 6 to 20 carbon atoms, $R^1$, $R^2$, $R^3$, $R^4$, $R^5$, $R^6$, $R^7$ and $R^8$ may be the same or different and each independently is a hydrogen atom, a halogen atom or a monovalent hydrocarbon group containing 1 to 5 carbon atoms, $R^9$ and $R^{10}$ may be the same or different and each is a divalent hydrocarbon group containing 1 to 5 carbon atoms, $R^{11}$ and $R^{12}$ may be the same or different and each is a hydrogen atom or a monovalent hydrocarbon group containing 1 to 20 carbon atoms, m and n represent the numbers of repetitions of the respective oxyalkylene units provided that $1 \leq m \leq 25$, $1 \leq n \leq 25$, $2 \leq m + n \leq 50$, are preferred in view of the dispersibility of the layered compound and of the thermal stability.

In the practice of the invention, the amount of the polyether compound can be adjusted so that the affinity of the layered compound for the polyalkylene terephthalate resin and the dispersibility of the layered compound in the polyester resin composition may be satisfactorily increased. If necessary, a plurality of polyether compounds having different functional groups may be used in combination. Therefore, the level of addition of the polyether compound is not always restricted in general terms of numerical values but the lower limit to the level of addition of the polyether compound per 100 parts by weight of the layered compound is 0.1 part by weight, preferably 0.2 part by weight, more preferably 0.3 part by weight, still more preferably 0.4 part by weight, particularly preferably 0.5 part by weight. The upper limit to the level of addition of the polyether compound per 100 parts by weight of the layered compound is 200 parts by weight, preferably 180 parts by weight, more preferably 160 parts by weight, still more preferably 140 parts by weight, particularly preferably 120 parts by weight. When the lower limit to the amount of the polyether compound is set at a level lower than 0.1 part by weight, the effect of finely dispersing the layered compound tends to become insufficient. Even if the upper limit to the amount of the polyether compound is set at 200 parts by weight or above, the effect will not be increased any longer; it is not necessary to use an amount exceeding 200 parts by weight.

The silane compound to be used in the practice of the invention may be any of those which are in general use and represented by the following general formula (6):

$$Y_nSiX_{4-n} \quad (6)$$

In the general formula (6), n is an integer of 0 to 3, Y is a hydrocarbon group containing 1 to 25 carbon atoms, which may optionally be substituted. In cases where the hydrocarbon group containing 1 to 25 carbon atoms has one or more substituents, the substituents include, for example, groups bound via ester bonding, groups bound via ether bonding, an epoxy group, amino groups, a carboxyl group, carbonyl-terminated groups, amido groups, mercapto groups, groups bound via sulfonyl bonding, groups bound via sulfinyl bonding, a nitro group, a nitroso group, a nitrile group, halogen atoms, a hydroxyl group and the like. The hydrocarbon group may be substituted by one of these species or two or more of these species. X represents a hydrolysable group and/or hydroxyl group and the hydrolysable group includes one or more groups selected from the class consisting of alkoxy groups, alkenyloxy groups, ketoxime groups, acyloxy groups, amino groups, aminoxy groups, amido groups and halogen atoms. When n or 4-n in the general formula (6) is 2 or more, the n Y or (4-n) X groups may be the same or different.

As examples of the silane compound of the general formula (6) in which Y is a hydrocarbon group containing 1 to 25 carbon atoms, there may be mentioned those having a long straight alkyl group, e.g. decyltrimethoxysilane, those having a lower alkyl group, e.g. methyltrimethoxysilane, those having an unsaturated hydrocarbon group, e.g. 2-hexenyltrimethoxysilane, those having a branched alkyl group, e.g. 2-ethylhexyltrimethoxysilane, those having a phenyl group, e.g. phenyltriethoxysilane, those having a naphthyl group, e.g. 3-β-naphthylpropyltrimethoxysilane, and those having an aralkyl group, e.g. p-vinylbenzyltrimethoxysilane. As examples of the silane compound of the general formula (6) in which Y is a vinyl group, in particular, among the hydrocarbon groups containing 1 to 25 carbon atoms, there may be mentioned vinyltrimethoxysilane, vinyltrichlorosilane and vinyltriacetoxysilane. When Y is a group containing a group substituted by a group bound via ester bonding, there may be specifically mentioned, for example, γ-methacryloxypropyltrimethoxysilane. When Y is a group containing a group substituted by a group bound by ether bonding, there may be mentioned, for example, γ-polyoxyethylenepropyltrimethoxysilane and 2-ethoxyethyltrimethoxysilane. When Y is an epoxy-substituted group, there may be mentioned, for example, γ-glycidoxypropyltrimethoxysilane. When Y is an amino-substituted group, there may be mentioned, for example, γ-aminopropyltrimethoxysilane, γ-(2-aminoethyl)aminopropyltrimethoxysilane and γ-anilinopropyltrimethoxysilane. When Y is a carbonyl-terminated group-substituted group, there may be mentioned γ-ureidopropyltriethoxysilane as a typical example. When Y is a mercapto group-substituted group, there may be mentioned, for example, γ-mercaptopropyltrimethoxysilane. When Y is a halogen atom-substituted group, there may be mentioned, for example, γ-chloropropyltriethoxysilane. When Y is a group containing a group substituted by a group bound via sulfonyl bonding, there may be mentioned, for example, γ-phenylsulfonylpropyltrimethoxysilane. When Y is a group containing a group substituted by a group bound via sulfinyl bonding, there may be mentioned, for example, γ-phenylsulfinylpropyltrimethoxysilane. When Y is a nitro group-substituted group, there may be mentioned, for example, γ-nitropropyltriethoxysilane. When Y is a nitroso group-substituted group, there may be mentioned, for example, γ-nitrosopropyltriethoxysilane. When Y is a nitrile group-substituted group, there may be mentioned, for example, γ-cyanoethyltriethoxysilane and γ-cyanopropyltriethoxysilane. When Y is a carboxyl group-substituted group, there may be mentioned, for example, γ-(4-carboxylphenyl)propyltrimethoxysilane. In addition, silane compounds in which Y is a hydroxyl group-containing group may also be used. As a typical example of such compounds, there may be mentioned N,N-di(2-hydroxyethyl)amino-3-propyltriethoxysilane. The hydroxyl group may also be in the form of a silanol group (SiOH).

Substitution products from or derivatives of the silane compounds mentioned above may also be used. These silane compounds may be used singly or two or more of them may be used in combination.

The level of addition of the silane compound in the practice of the invention can be adjusted so that the dispersibility of the layered compound in the polyester resin-based molded articles may be increased to a satisfactory extent. If necessary, a plurality of silane compounds having different functional groups may be used in combination. Therefore, the level of addition of the silane compound is not always restricted in general terms of numerical values but the lower limit to the level of addition of the silane compound per 100 parts by weight of the layered compound is 0.1 part by weight, preferably 0.2 part by weight, more preferably 0.3 part by weight, still more preferably 0.4 part by weight, particularly preferably 0.5 part by weight. The upper limit to the level of addition of the silane compound per 100 parts by weight of the layered compound is 200 parts by weight, preferably 180 parts by weight, more preferably 160 parts by weight, still more preferably 140 parts by weight, particularly preferably 120 parts by weight. When the lower limit to the amount of the silane compound is set at a level lower than 0.1 part by weight, the effect of finely dispersing the layered compound tends to become insufficient. Even if the silane compound is used at levels 200 parts by weight or above, the effect will not be increased any longer; it is not necessary to use an amount exceeding 200 parts by weight.

The method of treating the layered compound with such a treatment agent as the polyether compound or silane compound is not particularly restricted but mention may be made of the method comprising directly mixing the layered

compound and the treatment agent together and the method comprising mixing up the layered compound and the treatment agent in water or a water-containing polar solvent. The latter is desirable from the mixing efficiency viewpoint. More specifically, the layered compound can be treated with the treatment agent, for example, in the following manner.

First, the layered compound is mixed with a dispersion medium with stirring. The term "dispersion medium" is used herein to refer to water or a water-containing polar solvent. Specific examples have already been described hereinabove, hence no more mention is made here.

The method of stirring the layered compound and the dispersion medium is not particularly restricted but the stirring can be carried out using a wet stirrer known in the art. The wet stirrer includes high-speed stirrers whose stirring blade is rotated at a high speed for stirring, wet mills in which the sample material is wet-ground in the gap between the rotor and stator at a high shear rate, mechanical wet grinders utilizing a hard medium, wet impact mills in which the sample material is caused to collide against a hard article by means of a jet nozzle or the like, and wet ultrasonic crushers utilizing ultrasonic waves, and the like. For attaining more efficient mixing, the number of revolutions for stirring is set at 1,000 rpm or higher, preferably 1,500 rpm or higher, still more preferably 2, 000 rpm or higher, or a shear rate of not slower than 500 (1/s), preferably not slower than 1,000 (1/s), more preferably not slower than 1,500 (1/s) is applied. The upper limit to the number of revolutions is about 25, 000 rpm, and the upper limit to the shear rate is about 500, 000 (1/s). Stirring or shear application at a value exceeding the upper limit value tends to give no more additional effect; it is not necessary to carry out stirring at a value above the upper limit value. The time required for mixing is 1 to 10 minutes or longer. Then, the polyether compound is added, and the stirring is further continued under the same conditions to attain sufficient mixing up. As for the temperature during mixing, room temperature is generally sufficient but the mixing may be carried out with heating according to need. When heating is made, the maximum temperature can be arbitrarily set at a level lower than the decomposition temperature of the polyether compound employed and at the same time lower than the boiling point of the dispersion medium. Then, drying follows, if necessary followed by pulverization.

In the polyester resin composition of the invention, the lower limit value of the layered compound-due ash content of the polyester resin composition is adjusted so that it may typically amount to 0.1% by weight, preferably 0.3% by weight, more preferably 0.5% by weight, still more preferably 1.0% by weight, particularly preferably 1.5% by weight. The upper limit value of that ash content is adjusted so that it may amount to 60% by weight, preferably 50% by weight, more preferably 40% by weight, still more preferably 30% by weight. When the lower limit to the ash content is set at a level lower than 0.1% by weight, the thermal stability may become insufficient and, when the upper limit value exceeds 60% by weight, the surface gloss may be sacrificed.

The layered compound dispersed in the polyester resin composition of the invention has a structure quite different from that micron-sized aggregated structure composed of a large number of layers stratified which is shown by the layered compound before use. Thus, upon treatment with the polyether compound or silane compound, the layers are cleaved open, become independent of one another, and subdivided. As a result, the layered compound is now dispersed in the polyester resin composition in the form of very fine, independent lamellae the number of which is markedly greater as compared with the layered compound before use. The state of dispersion of the layered compound in the form of such lamellae can be expressed in terms of the area-equivalent circle diameter [D], aspect ratio (ratio: layer or lamella length/layer or lamella thickness), number of dispersed particles, maximum layer thickness and average layer thickness, which are described below.

First, the area-equivalent circle diameter [D] is defined as the diameter of a circle having the same area as the area of each of layered compound dispersed in various shapes as observed in an image obtained under a microscope, and the like. In that case, the proportion of the number of layered compound dispersed in the polyester resin composition and having an area-equivalent circle diameter [D] of not greater than 3,000 Å is preferably not lower than 20%, more preferably not lower than 35%, still more preferably not lower than 50%, particularly preferably not lower than 65%. In case the proportion of lamellae whose area-equivalent circle diameter [D] is not greater than 3,000 Å is lower than 20%, the effects thereof on the thermal stability and elastic modulus of the polyester resin composition may be insufficient in some cases. The average value of the area-equivalent circle diameters [D] of the layered compound dispersed in the polyester resin composition of the invention is preferably not greater than 5,000 Å, more preferably not greater than 4,500 Å, still more preferably not greater than 4, 000 Å, particularly preferably not greater than 3,500 Å. If the average value of the area-equivalent circle diameters [D] is greater than 5, 000 Å, the effects of improving the thermal stability and elastic modulus of the polyester resin composition will become insufficient and the surface appearance may be deteriorated in some cases. There is no particular lower limit value. However, at smaller average values than 100 Å, the effects will be increased little; hence, it is not necessary to reduce the average value to a level lower than 100 Å.

As for the area-equivalent circle diameter [D] measurement, quantification can be made by selecting an arbitrary region containing at least 100 layered compound on an image obtained by means of a microscope, for example, followed by image processing using an image processor or the like and further followed by computer processing.

When the average aspect ratio is defined as the number average layer length/layer thickness ratio for the layered compound dispersed in the resin, the layered compound dispersed in the polyester resin composition of the invention preferably has an average aspect ratio of 10 to 300, more preferably 15 to 300, still more preferably 20 to 300.

When the layered compound has an average aspect ratio lower than 10, their effects of improving the thermal stability and rigidity of the polyester resin composition of the invention may not be produced to a satisfactory extent in some cases. At levels higher than 300, no more increased effects will be produced; hence, it is not necessary that the average aspect ratio be greater than 300.

When the value [N] is defined as the number of dispersed particles per unit weight proportion of the layered compound per unit area of 100 $\mu m^2$ of the polyester resin composition, the layered compound dispersed in the polyester resin composition of the invention preferably has an [N] value of not lower than 30, more preferably not lower than 45, still more preferably not lower than 60. Although there is no particular upper limit value, the effects will remain unchanged at [N] value levels exceeding about 1,000 and, therefore, that value is not required to be higher than 1,000. When the [N] value is less than 30, the improving effects on the thermal stability and elastic modulus of the polyester resin composition may become insufficient in some instances. The [N] value can be determined, for example, in the following manner. Thus, an ultrathin section, about 50 $\mu m$ to 100 $\mu m$ in thickness, is prepared, by cutting out, from the polyester resin composition, the section is subjected to photography under a transmission electron microscope (hereinafter referred to also as "TEM"), for example, the number of layered compound particles occurring in an arbitrary region having an area of 100 $\mu m^2$ on the image obtained is counted, and the count is divided by the weight proportion of the layered compound used. Alternatively, an arbitrary region (the area of which is measured beforehand) containing at least 100 particles on the TEM image is selected and the number of particles occurring in that region is counted, the count is divided by the weight proportion of the layered compound used and the value obtained is converted to a value per area of 100 $\mu m^2$, which is the [N] value. Therefore, the [N] value can be quantified by taking, for example, a TEM photograph of the polyester resin composition.

When at least one of the conditions concerning the state of dispersion of the layered compound in the polyester resin composition, namely that the proportion of the layered compound having an area-equivalent circle diameter [D] of not greater than 3,000 Å is not lower than 20%, that the average value of the area-equivalent circle diameters [D] of the layer compound is not greater than 5,000 Å and that the [N] value defined as the number of particles per unit weight proportion of the layered compound occurring in an area of 100 $\mu m^2$ of the resin composition is not lower than 30, is satisfied, the layered compound is uniformly dispersed in the form of sufficiently fine particles and the number of dispersed particles becomes very great. As a result, the thermal stability and elastic modulus improving effects can be obtained.

Further, when the average layer thickness is defined as the number average value of the layer thicknesses of the layered compound dispersed in the form of lamellae or laminae, the upper limit to the average layer thickness of the layered compound dispersed in the polyester resin composition of the invention is preferably not higher than 500 Å, more preferably not higher than 450 Å, still more preferably not higher than 400 Å. When the average layer thickness exceeds 500 Å, the improving effects on the thermal stability and elastic modulus of the polyester resin composition of the invention may not be fully obtained in some instances. The lower limit to the average layer thickness is not particularly restricted but preferably is 50 Å, more preferably 60 Å or higher, still more preferably 70 Å or higher.

Further, when the maximum layer thickness is defined as the maximum layer thickness value of the layered compound dispersed in the polyester resin composition of the invention, the upper limit to the maximum layer thickness of the layered compound is preferably not higher than 2,000 Å, more preferably not higher than 1,800 Å, still more preferably not higher than 1,500 Å. When the maximum layer thickness exceeds 2, 000 Å, the balance among the thermal stability, elastic modulus and surface characteristics of the polyester resin composition of the invention may be disturbed in certain instances. The lower limit to the maximum layer thickness of the layered compound is not particularly restricted but preferably is 100 Å, more preferably 150 Å or higher, still more preferably 200 Å or higher.

The layer thickness and the layer length can be determined from an image obtained by photographing a film obtained by heating and melting the polyester resin composition of the invention and hot press molding or stretch blow molding of the melt or a thin-walled molding obtained by injection molding of the molten resin using a microscope or the like.

Thus, it is now supposed that a film specimen or a sheet-shaped injection molding test specimen with a thickness of about 0.5 to 2 mm, prepared by the method mentioned above, is placed on an X-Y plane. An ultrathin section with a thickness of about 50 $\mu m$ to 100 $\mu m$ is cut out of the film or test specimen along a plane parallel to the X-Z plane or Y-Z plane, and the section is observed under a transmission electron microscope or the like at a high magnification of about 40 to 100 thousand or above times, whereby the layer thickness and layer length can be determined. For the measurement, an arbitrary region comprising at least 100 layer compound is selected on the transmission electron microscopic image obtained in the above manner and quantification can be made by image processing using an image processor or the like, followed by computer processing, and the like. Alternatively, they can also be determined by measurements using a ruler or the like.

The layered compound dispersed very minutely and uniformly in the polyalkylene terephthalate resin, as described above, inhibits the polyalkylene terephthalate resin from shrinking on the occasion of molding or from shrinking upon heating. Further, it has a crystallinity increasing effect as well.

As described hereinabove, the fact that the polyalkylene terephthalate resin has a low acid value not exceeding 30 $\mu eq/g$, by which the generation of low-molecular substances due to degradation upon melt processing is suppressed,

and the crystallization promoting and shrinkage inhibiting effects of the layered compound finely dispersed therein, are combined together, so that the surface gloss can now be maintained at high levels even upon long-period exposure to elevated temperatures. Therefore, when the composition contains such a low-crystallinity resin as polyalkylene naphthalate or polyalkylene isophthalate, such effects are lost.

The method of producing the polyester resin composition of the invention is not particularly restricted but mention may be made of, for example, the method comprising melt kneading the polyalkylene terephthalate resin and the polyether compound-treated layered compound using any of various conventional kneaders. The kneaders include, for example, single-screw extruders, twin-screw extruders, rolls, Bambury mixers and kneaders. In particular, high shearing efficiency kneaders are preferred. The polyalkylene terephthalate resin and the polyether compound-treated layered compound may be charged all together into the kneader for melt kneading, or the layered compound may be added to the polyalkylene terephthalate resin in a molten state brought about in advance, for melt kneading.

The polyester resin composition of the invention can also be produced by polymerization. As for the method of polymerization, there may be mentioned, for example, the method described in WO 99/23162. Thus, the method comprises thoroughly mixing an aqueous slurry comprising the layered compound (reference) surface-treated with a silane compound as finely dispersed in water with the reactive monomers and/or reactive oligomers for producing the polyester resin and, after mixing up, initiating the polymerization. Preferred, however, as the polymerizer is a continuous polymerizer, and the continuous polymerizer is a polymerizer which is of a twin-screw stirring blade type having scrapers capable of scraping off the resin during polymerization and is excellent in degassing efficiency and self-cleaning properties. Such polymerizer is characterized in that the thermal history of the resin in the polymerizer can be shortened and the residence thereof can be minimized, so that the acid value can be suppressed to low levels.

In the polyester resin composition of the invention, there may be incorporated, according to need, one or more of impact resistance improvers such as polybutadiene, butadiene-styrene copolymers, acrylic rubbers, ionomers, ethylene-propylene copolymers, ethylene-propylene-diene copolymers, natural rubbers, chlorinated butyl rubbers, $\alpha$-olefin homopolymers, copolymers of two or more $\alpha$-olefins (including random, block, graft or other copolymers, and mixtures thereof) and olefin-based elastomers. These may be modifications as modified with an acid compound such as maleic anhydride or an epoxy compound such as glycidyl methacrylate. Any other arbitrary thermoplastic or thermosetting resins, for example unsaturated polyester resins, polyester carbonate resins, liquid crystal polyester resins, polyolefin resins, polyamide resins, rubbery polymer-reinforced styrenic resins, polyphenylene sulfide resins, polyphenylene ether resins, polyacetal resins, polysulfone resins and polyacrylate resins, may further be used either singly or in combination in amounts within the range within which the mechanical and other characteristics will not be adversely affected.

Further, one or more of such additives as pigments or dyes, heat stabilizers, antioxidants, ultraviolet absorbers, light stabilizers, lubricants, plasticizers, flame retardants and antistatic agents may also be added according to need.

In the practice of the invention, the diffuse reflectance of the molded article surface provided with an aluminum layer without any such primer coating as undercoating is preferably not higher than 2.0%, more preferably not higher than 1.8%, still more preferably not higher than 1.5%, as measured according to JIS D 5705. When the diffuse reflectance exceeds 2.0%, the gloss is unsatisfactory and troubles may arise in the field of application as illuminating parts. There is no particular lower limit to the diffuse reflectance but, if asked, the lower limit is about 0.6%.

The deflection temperature under load of the molded article of the present invention, when measured under a load of 0.45 MPa, is preferably not lower than 150°C, more preferably not lower than 155°C, and still more preferably not lower than 160°C. When the deflection temperature under load is lower than 150°C, the molded article may be deformed by the heat from a light source. There is no particular upper limit to the deflection temperature under load but, if asked, the upper limit is about 180°C.

The polyester-based molded article obtained from the polyester resin composition of the invention is excellent in thermal stability and, therefore, even when the molded article provided with an aluminum layer without any such primer coating as undercoating is exposed to high temperatures, the diffuse reflectance of the molded article surface can be retained at low levels.

In the practice of the invention, the surface of the polyester-based molded article obtained from the polyester resin composition, when provided with an aluminum layer without any such primer coating as undercoating, preferably shows a diffuse reflectance, after 10 hours of heat treatment at 150°C, of not higher than 3.0%, more preferably not higher than 2.8%, still more preferably not higher than 2.5%.

The method of providing the molded article surface with an aluminum layer is not particularly restricted but any of the conventional methods known in the art can be used. Available as the method of providing an aluminum layer are dry plating methods (physical vapor deposition or PVD methods). Among the dry plating methods, the vacuum vapor deposition method and sputtering method are preferred. For obtaining a good light-reflecting surface with a further increased level of luminance, use may also be made of the method comprising converting argon gas into plasma by means of a direct current or high-frequency waves in advance and exposing the resin molding surface to the argon plasma jet obtained for surface activation treatment, followed by aluminum layer formation. Further available is the method comprising introducing functional groups onto the molded article surface by exposing the surface after surface

activation treatment to oxygen, nitrogen or a mixture thereof or providing the surface with an active molecular layer or a hydrophilic polymer layer by exposure to a reactive monomer, in either case followed by aluminum layer formation. By using this method, it is possible to obtain molded articles high in luminance and having a good light-reflecting surface.

BEST MODES FOR CARYYING OUT THE INVENTION

The following examples illustrate the present invention in further detail. These examples are, however, by no means limitative of the scope of the present invention. Unless otherwise specifies, the raw materials used in the examples and comparative examples were unpurified ones.

(Modulus of elasticity in bending)

The polyester resin composition obtained in each production example was dried at 140°C for 5 hours. Using an injection molding machine (clamping pressure: 75 tons), the resin composition was injection-molded, at a resin temperature of 250 to 270°C, into test specimens, about 10 x 100 x 6 mm in size. The specimens obtained were measured for modulus of elasticity in bending according ASTM D 790.

(Deflection temperature under load)

The same test specimens as used in modulus of elasticity in bending measurements were used. The deflection temperature under a load of 0.45 MPa was measured according to ASTM D 648. The higher the value of the deflection temperature under load is, the more preferred the resin composition is.

(Surface gloss/diffuse reflectance)

The surface appearance was evaluated in terms of the diffuse reflectance of the molded article surface vapor-deposited with aluminum. Using a mold mirror-finished by polishing with a #14000 abrasive, flat sheet-like test specimens, about 80 mm x about 50 mm x about 2 mm (thickness) in size, were molded. Using an electron beam-induced vapor deposition apparatus (product of ULVAC Inc., EBH6), aluminum was vapor-deposited onto the test specimens to a thickness of about 800 Å. Immediately after aluminum vapor deposition, diffuse reflectance measurements were carried out using a mirror reflectance meter (product of Tokyo Denshoku Co., Ltd., TR-1100AD). The smaller the diffuse reflectance value is, the more preferred the surface appearance is.

(Heat resistance of surface gloss)

The heat resistance of the surface gloss is evaluated in terms of the diffuse reflectance after heat treatment (50 hours of standing in an oven in an atmosphere of 160°C) of the above molded article coated with aluminum by vapor deposition. The smaller the change in value after heat treatment as compared with the value before treatment is, the better the heat resistance is.

(Acid value of polyester resin)

About 0.5 g of each sample was accurately weighed and placed in a test tube. Then, the sample was dissolved in 25 ml of benzyl alcohol (special reagent grade) heated at about 195°C and, after cooling, 2 ml of ethanol was added. The thus-prepared sample solution was titrated with a 0.01 N solution of sodium hydroxide in benzyl alcohol. Separately, the blank value was determined by using benzyl alcohol alone, and the acid value was calculated according to the following formula:

$$\text{Acid value } (\mu eq/g) = (A - B) \times 0.01 \times F \times 1000/W$$

where A: titer (ml);
B: titer in the blank test (ml);
F: factor of 0.01 N solution of sodium hydroxide in benzyl alcohol;
W: resin sample weight (g).

(Evaluation of dispersed state of filler)

Ultrathin sections with a thickness of 50 to 100 μm as obtained by the frozen section technique were used. Using a transmission electron microscope (product of JEOL Ltd., JEM-1200EX), the state of dispersion of expandable mica was observed and photographed at an acceleration voltage of 80 kV and a magnification of 40 to 1, 000 thousand times. On each TEM photograph, a region containing at least 100 dispersed particles was selected arbitrarily and the layer thickness, layer length, number of particles ([N] value) and area-equivalent circle diameter [D] were measured either manually using a graduated ruler or by processing using Interquest Corporation's image analyzer PIAS III.

The area-equivalent circle diameter [D] was determined by processing using Interquest Corporation's image analyzer PIAS III.

The [N] value was determined as follows. First, on each TEM image, the number of expandable mica particles occurring in an area selected was counted. Separately, the ash content of the expandable mica-derived resin composition was determined. The number of particles was divided by the ash content and the quotient was converted to the value per area 100 $\mu m^2$, which was recorded as the [N] value.

The number average value derived from respective expandable mica layer thicknesses was taken as the average layer thickness, and the maximum value among respective expandable mica layer thicknesses was taken as the maximum layer thickness. The number average value derived from respective expandable mica layer length-to-layer thickness ratios was taken as the average aspect ratio.

(Production Example 1)

Polyester resin A1 (polyethylene terephthalate resin)

A vertical polymerizer equipped with a distillation column, rectification column, nitrogen inlet tube and stirrer was charged with 4, 000 g of dimethyl terephthalate (DMT), 1, 500 g of ethylene glycol (EG), 1.0 g of titanium tetrabutoxide and 3.0 g of a hindered phenol stabilizer (Adekastab AO60, product of Asahi Denka Co., Ltd.; hereinafter referred to as AO60"), and the transesterification reaction was allowed to proceed at a reaction temperature of 180 to 190°C in a dry nitrogen stream for about 2 hours. Then, 0.8 g of germanium oxide was added, and the reaction temperature was raised to 270 to 280°C and the reaction was allowed to proceed for oligomer formation. The oligomer mixture formed was transferred to a horizontal twin-screw continuous polymerizer having a scraper system highly capable of self cleaning, and the polymerization was carried out under reduced pressure (0.8 to 5.0 torr (0.107 to 0.665 MPa)) to give a polyethylene terephthalate (PET) resin. The polymerization time was about 45 minutes. The PET obtained had a logarithmic viscosity of 0.71 (dl/g) and an acid value of 11 μeq/g.

(Production Example 2)

Polyester resin A2 (polyethylene terephthalate resin)

Like in Production Example 1, a vertical polymerizer equipped with a distillation column, rectification column, nitrogen inlet tube and stirrer was charged with DMT, EG, titanium tetrabutoxide and A060 respectively in the same amounts as used in Production Example 1, and the transesterification reaction was allowed to proceed at a reaction temperature of 180 to 190°C in a dry nitrogen atmosphere for about 2 hours. Then, 0.8 g of germanium oxide was added, the reaction temperature was raised to 270°C to 280°C and the reaction was allowed to proceed and then the polymerization was carried out under reduced pressure (0.8 to 5.0 torr (0.107 to 0.665 MPa)) to give PET. The polymerization time was about 120 minutes. The PET obtained had a logarithmic viscosity of 0.74 (dl/g) and an acid value of 68 μeq/g.

(Production Example 3)

Polyester resin A3 (polybutylene terephthalate resin)

Using the same polymerizer as used in Production Example 1, a polybutylene terephthalate (PBT) resin was produced by polymerization. The raw materials used were 4,000 g of DMT, 2, 300 g of 1, 4-butanediol, 1.0 g of titanium tetrabutoxide and 3.0 g of the hindered phenol stabilizer A060. After charging of these, the transesterification reaction was allowed to proceed in a dry nitrogen atmosphere at a reaction temperature of 180 to 190°C for about 2 hours. Then, the reaction temperature was raised to 240°C to 260°C and the reaction was allowed to proceed for the formation of an oligomer mixture, which was transferred to a horizontal twin-screw continuous polymerizer. The polymerization was carried out under reduced pressure (0.8 to 5.0 torr (0.107 to 0.665 MPa)) for polymerization to give a PBT resin. The polymerization time was about 55 minutes. The PBT resin obtained had a logarithmic viscosity of 0.99 (dl/g) and an acid

value of 25 μeq/g.

(Production Example 4)

Polyester resin A4 (polybutylene terephthalate resin)

A PBT resin was obtained in the same manner as in Production Example 2 except that the polymerization time was about 45 minutes. The PBT resin obtained had a logarithmic viscosity of 0.94 (dl/g) and an acid value of 13 μeq/g.

(Production Example 5)

Polyester resin A5 (polybutylene terephthalate resin)

The PBT obtained in Production Example 4 was pelletized, followed by solid-phase polymerization at 210°C under reduced pressure (0.8 to 2.0 torr (0.107 to 0.268 MPa)). The resin obtained had a logarithmic viscosity of 1.02 (dl/g) and an acid value of 7 μeq/g.

(Production Example 6)

Polyester resin A6 (polybutylene terephthalate resin)

Like in Production Example 3, a vertical polymerizer equipped with a distillation column, rectification column, nitrogen inlet tube and stirrer was charged with DMT, 1, 4-BD, titanium tetrabutoxide and AO60 respectively in the same amounts as used in Production Example 3, and the transesterification reaction was allowed to proceed at a reaction temperature of 180 to 190°C in a dry nitrogen atmosphere for about 2 hours. Then, 0.8 g of germanium oxide was added, the reaction temperature was raised to 240°C to 260°C and the reaction was allowed to proceed and then the polymerization was carried out under reduced pressure (0.8 to 5.0 torr (0.107 to 0.665 MPa)) to give a PBT resin. The polymerization time was about 130 minutes. The PBT obtained had a logarithmic viscosity of 0.95 (dl/g) and an acid value of 73 μeq/g.

(Production Example 7)

Surface-treated layered compound B1

Eight (8) parts of expandable fluoromica (product of CO-OP Chemical, Somasif ME100) was mixed with 100 weight parts of pure water. Then, 1.3 parts of a polyether compound (product of Toho Chemical Industries Co., Ltd., Bisol) was added and mixing was continued for 15 to 30 minutes for treatment. Thereafter, the mixture was converted to a powder to give a polyether compound-treated layered compound (B1).

(Production Example 8) (reference)

Four (4) parts of montmorillonite (product of Kunimine Industries Co., Ltd., Kunipia F) was dispersed in 100 weight parts of pure water, 0.4 part of γ-(2-aminoethyl)aminopropyltrimethoxysilane was added, followed by further mixing to give a surface-treated montmorillonite-containing slurry (slurry C1).

(Examples 1 to 4)

According to the formulations given in Table 1, the polyester resin and surface-treated layered compound obtained in the respective production examples were melt-kneaded at a resin temperature of 230 to 260°C using a twin-screw extruder (product of Japan Steel Works Ltd., TEX44) to give polyester resin compositions, which were evaluated with respect to various physical properties. The results are shown in Table 1.

(Comparative Examples 1 and 2)

According to the formulations shown in Table 1, the polyester resin obtained in Production Example 2 or Production Example 6 and the surface-treated layered compound B1 obtained in Production Example 7 were melt-kneaded using a twin-screw extruder (product of Japan Steel Works Ltd., TEX44) to give polyester resin compositions, which were evaluated for various physical properties. The results are shown in Table 1.

(Example 5) (reference)

The same vertical polymerizer as used in Production Example 1 was charged with 4,000 g of the slurry C1 obtained in Production Example 8 and 3,300 g of bis-2-hydroxyethyl terephthalate (product of Maruzen Chemical, BHET) and mixed together at 120°C and dehydrated under reduced pressure. Then, 0.8 g of germanium oxide was added, the reaction temperature was raised to 270°C to 280°C and the reaction was allowed to proceed for oligomer formation. The oligomer mixture formed was transferred to a horizontal twin-screw continuous polymerizer equipped with a scraper mechanism highly capable of self-cleaning, link in Production Example 1, and the polymerization was carried out under reduced pressure (0.8 to 5.0 torr (0.107 to 0.665 MPa)) to give a PET resin composition (D1) with montmorillonite finely dispersed therein, which was evaluated in the same manner as in Example 1. The results are shown in Table 2. The polymerization time was about 50 minutes. The thus-obtained PET resin compound D1 had a logarithmic viscosity of 0.70 (dl/g) and an acid value of 14 μeq/g.

(Example 6) (reference)

The resin composition obtained in Example 5 was subjected to solid phase polymerization under reduced pressure (0.8 to 2.0 torr (0.107 to 0.268 MPa)) to give a PET resin composition (D2), which was evaluated in the same manner as in Example 1. The results are shown in Table 2. The PET resin composition D2 obtained had a logarithmic viscosity of 0.76 (dl/g) and an acid value of 7 μeq/g.

(Comparative Example 3)

The same vertical polymerizer as used in Production Example 1 was charged with 4,000 g of the slurry C1 obtained in Production Example 8 and 3,300 g of bis-2-hydroxyethyl terephthalate (Maruzen Chemical's BHET), followed by mixing at 120°C and dehydration under reduced pressure. Then, 0.8 g of germanium oxide was added, the reaction temperature was raised to 270°C to 280°C and the polymerization was carried out under reduced pressure (0.8 to 5.0 torr (0.107 to 0. 665 MPa)) to give a PET resin composition (D3) with montmorillonite finely dispersed therein, which was evaluated in the same manner as in Example 1. The results are shown in Table 2. The polymerization time was about 160 minutes. The PET resin composition D3 obtained had a logarithmic viscosity of 0.68 (dl/g) and an acid value of 98 μeq/g.

Table-1

| | | Example | | | | Comparative Example | |
|---|---|---|---|---|---|---|---|
| | | 1 | 2 | 3 | 4 | 1 | 2 |
| Polyester resin A1 | Parts by weight | 100 | 30 | 30 | 30 | | |
| Polyester resin A2 | | | | | | 100 | 30 |
| Polyester resin A3 | | | 70 | | | | |
| Polyester resin A4 | | | | 70 | | | |
| Polyester resin A5 | | | | | 70 | | |
| Polyester resin A6 | | | | | | | 70 |
| Surface-treated layered compound B1 | | 8 | 8 | 8 | 8 | 8 | 8 |
| Ash content | wt% | 6.2 | 6.3 | 6.2 | 6.2 | 6.3 | 6.3 |
| Modulus of elasticity in bending | MPa | 4800 | 4550 | 4520 | 4550 | 4780 | 4530 |
| Deflection temperature under load | °C | 188 | 183 | 182 | 185 | 189 | 180 |
| Diffuse reflectance | % | 0.7 | 1.0 | 0.9 | 0.8 | 0.8 | 1.3 |
| Diffuse reflectance after heat treatment | % | 1.2 | 1.8 | 1.5 | 1 ,2 | 4.5 | 4.8 |
| Proportion of particles with [D] ≤ 3000 Å | % | 80 | 76 | 76 | 76 | 80 | 76 |
| Average value of [D] | Å | 1200 | 1290 | 1290 | 1290 | 1200 | 1290 |
| Number of dispersed particles. [N] | 1/w %·100 $\mu^2$ | 123 | 118 | 118 | 118 | 123 | 118 |
| Average aspect ratio | - | 110 | 105 | 105 | 105 | 110 | 105 |
| Average layer thickness | Å | 120 | 135 | 135 | 135 | 120 | 135 |
| Maximum layer thickness | Å | 450 | 520 | 520 | 520 | 450 | 520 |

Table 2

| | | Example | | Comp.Ex. |
|---|---|---|---|---|
| | | 5 | 6 | 3 |
| PET resin composition D1 | Parts by weight | 100 | | |
| PET resin composition D2 | Parts by weight | | 100 | |
| PET resin composition D3 | Parts by weight | | | 100 |
| Ash content | wt% | 4.0 | 4.1 | 4.1 |
| Modulus of elasticity in bending | MPa | 4580 | 4610 | 4640 |
| Deflection temperature under load | °C | 185 | 182 | 183 |
| Diffuse reflectance | % | 0.8 | 0.7 | 1.2 |
| Diffuse reflectance after heat treatment | % | 1.3 | 1.1 | 5.1 |
| Proportion of particles with [D] ≤ 3000 Å | % | 92 | 91 | 92 |
| Average value of [D] | Å | 1010 | 1050 | 1100 |
| Number of dispersed particles, [N] | 1/wt %·100 $\mu^2$ | 320 | 305 | 310 |
| Average aspect ratio | - | 210 | 215 | 210 |
| Average layer thickness | Å | 55 | 56 | 54 |
| Maximum layer thickness | Å | 230 | 220 | 215 |

The polyester resin composition obtained in accordance with the invention may be molded by injection molded or hot press molding and can also be used in blow molding. The molded articles obtained are excellent in surface appearance and in mechanical characteristicts and thermal deformation resistance, for example, and therefore can be suitably used, for example, as automotive parts, household electric appliance parts, household daily necessities, packaging materials ans other materials for general industrial use.

## Claims

1. A polyester resin composition which comprises a polyalkylene terephthalate resin having an acid value of not higher than 30 μeq/g and a layered compound wherein the layered compound has been treated with a polyether compound.

2. The polyester resin composition according to Claim 1, wherein the polyalkylene terephthalate resin having an acid value of not higher than 30 μeq/g comprises at least one polyalkylene terephthalate resin selected from the group consisting of polyethylene terephthalate resins, polypropylene terephthalate resins and polybutylene terephthalate resins.

3. The polyester resin composition according to claim 1 or 2, wherein the layered compound has been treated with a silane compound.

4. A polyester resin-based molded article which is partly or wholly made of the polyester resin composition according to any one of Claims 1 to 3.

5. The polyester resin-based molded article according to Claim 4 which satisfies the following requirements (a) and (b):

   (a) That the diffuse reflectance of the surface provided with an aluminum layer without primer coating should be not higher than 2.0%, wherein the diffuse reflectance is measured according to JIS D 5705 and the thickness of the aluminum layer is about 800 Å;
   (b) That the deflection temperature under a load of 0.45 MPa should be not lower than 150°C, wherein the deflection temperature is measured according to ASTM D 648 and the used test specimen is about 10 x 100 x 6 mm in size.

6. The polyester resin-based molded article according to Claim 4 or 5 which further satisfies the following requirement (c):

(c) That the diffuse reflectance of the surface provided with an aluminum layer without primer coating as measured after 10 hours of treatment at 150°C should be not higher than 3.0%, wherein the diffuse reflectance is measured according to JISD5705 and thickness of the aluminum layer is about 800Å.

## Patentansprüche

1. Eine Polyesterharzzusammensetzung, die ein Polyalkylenterephthalatharz mit einer Säurezahl von nicht höher als 30 μeq/g und eine geschichtete Verbindung umfasst, wobei die geschichtete Verbindung mit einer Polyetherverbindung behandelt worden ist.

2. Die Polyesterharzzusammensetzung gemäß Anspruch 1, wobei das Polyalkylenterephthalatharz mit einer Säurezahl von nicht höher als 30 μeq/g mindestens ein Polyalkylenterephthalatharz, das aus der Gruppe bestehend aus Polyethylenterephthalatharzen, Polypropylenterephthalatharzen und Polybutylenterephthalatharzen ausgewählt ist, umfasst.

3. Die Polyesterharzzusammensetzung gemäß Anspruch 1 oder 2, wobei die geschichtete Verbindung mit einer Silanverbindung behandelt worden ist.

4. Ein Formgegenstand auf Basis von Polyesterharz, welcher zum Teil oder vollständig aus der Polyesterharzzusammensetzung gemäß einem der Ansprüche 1 bis 3 besteht.

5. Der Formgegenstand auf Basis von Polyesterharz gemäß Anspruch 4, welcher die folgenden Anforderungen (a) und (b) erfüllt:

(a) die diffuse Reflexion der mit einer Aluminiumschicht ohne Primerbeschichtung versehenen Oberfläche soll nicht höher als 2,0 % sein, wobei die diffuse Reflexion gemäß JIS D 5705 gemessen wird und die Dicke der Aluminiumschicht etwa 800 Å beträgt;
(b) die Formbeständigkeitstemperatur bei einer Last von 0,45 MPa soll nicht niedriger als 150°C sein, wobei die Formbeständigkeitstemperatur gemäß ASTM D 648 gemessen wird und die verwendete Probe eine Größe von etwa 10 x 100 x 6 mm aufweist.

6. Der Formgegenstand auf Basis von Polyesterharz gemäß Anspruch 4 oder 5, welcher des Weiteren die folgende Anforderung (c) erfüllt:

(c) die diffuse Reflexion der mit einer Aluminiumschicht ohne Primerbeschichtung versehenen Oberfläche soll bei Messung nach 10 Stunden Behandlung bei 150°C nicht höher als 3,0 % sein, wobei die diffuse Reflexion gemäß JIS D 5705 gemessen wird und die Dicke der Aluminiumschicht etwa 800 Å beträgt.

## Revendications

1. Composition de résine de polyester qui comprend une résine de poly(alkylène téréphtalate) ayant un indice acide d'au plus 30 μeq/g et un composé en couches dans laquelle le composé en couches a été traité avec un composé de polyéther.

2. Composition de résine de polyester selon la revendication 1, dans laquelle la résine de poly(alkylène téréphtalate) ayant un indice acide d'au plus 30 μeq/g comprend au moins une résine de poly(alkylène téréphtalate) choisie dans le groupe constitué de résines de poly(éthylène téréphtalate), de résines de poly(propylène téréphtalate) et de résines de poly(butylène téréphtalate).

3. Composition de résine de polyester selon la revendication 1 ou 2, dans laquelle le composé en couches a été traité avec un composé de silane.

4. Article moulé à base de résine de polyester qui est partiellement ou complètement constitué de la composition de résine de polyester selon l'une quelconque des revendications 1 à 3.

5. Article moulé à base de résine de polyester selon la revendication 4 qui satisfait les exigences (a) et (b) suivantes :

(a) la réflectance diffuse de la surface munie d'une couche d'aluminium sans revêtement de base ne doit pas être supérieure à 2,0 %, où la réflectance diffuse est mesurée selon JIS D 5705 et l'épaisseur de la couche d'aluminium est d'environ 800 Â ;

(b) la température de déflection sous une charge de 0,45 MPa ne doit pas être inférieure à 150°C, où la température de déflection est mesurée selon ASTM D 648 et l'échantillon de test utilisé est d'une dimension d'environ 10 x 100 x 6 mm.

**6.** Article moulé à base de résine de polyester selon la revendication 4 ou 5 qui satisfait de plus l'exigence (c) suivante :

(c) la réflectance diffuse de la surface munie d'une couche d'aluminium sans revêtement de base comme mesurée après 10 h de traitement à 150°C ne doit pas être supérieure à 3,0 %, où la réflectance diffuse est mesurée selon JIS D 5705 et l'épaisseur de la couche d'aluminum est d'environ 800 Â.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI10259016 B
- JP HEI10310420 B
- WO 9923162 A
- WO 0188035 A
- JP 2002179895 A
- JP 2003268216 A
- JP HEI02149415 B